## Europäisches Patentamt
## European Patent Office
## Office européen des brevets

(11) Publication number: **0 099 640**
**B1**

(12) # EUROPEAN PATENT SPECIFICATION

(45) Date of publication of patent specification: 03.09.86

(51) Int. Cl.⁴: **H 01 B 3/44,** C 08 L 23/06

(21) Application number: 83303394.7

(22) Date of filing: 13.06.83

(54) **Cross-linked polyethylene insulated cables.**

(30) Priority: 23.06.82 JP 108959/82

(43) Date of publication of application:
01.02.84 Bulletin 84/05

(45) Publication of the grant of the patent:
03.09.86 Bulletin 86/36

(84) Designated Contracting States:
CH DE FR GB IT LI NL SE

(56) References cited:
GB-A-2 019 412

JAPANESE JOURNAL OF APPLIED PHYSICS,
vol. 15, no. 3, 1976, pages 547-548, Tokyo, JP.
M. NAGAO et al.: "Electrical breakdown of
polyethylene, ethylene-vinyl acetate
copolymer and their blend in low-temperature
region"

(73) Proprietor: SUMITOMO ELECTRIC INDUSTRIES
LIMITED
No. 15, Kitahama 5-chome Higashi-ku
Osaka-shi Osaka 541 (JP)

(72) Inventor: Yamanouchi, Shosuke Osaka Works
of Sumitomo
Electric Ind. Ltd., No. 1-3, Shimaya 1-chome
Konohana-ku Osaka-ku Osaka (JP)
Inventor: Fukunaga, Sadao Osaka Works of
Sumitomo Electric
Industries Limited, No. 1-3, Shimaya 1-chome
Konohana-ku Osaka-shi Osaka (JP)
Inventor: Matsubara, Hironaga Osaka Works of
Sumitomo Elec.
Ind. Ltd., No. 1-3, Shimaya 1-chome
Konohana-ku Osaka-shi Osaka (JP)

(74) Representative: Carpenter, David et al
Marks & Clerk Alpha Tower Suffolk Street
Queensway
Birmingham B1 1TT (GB)

Courier Press, Leamington Spa, England.

## Description

### Field of the invention

The present invention relates to electric wires or cables.

### Background of the invention

Electric wires or cables having dielectric layers of polyolefins such as polyethylene, cross-linked polyethylene and the like are in wide use. Such polymers have in recent years been improved so that they are able to withstand high applied voltages. One important problem at present with such electric wires and cables is that they undergo a gradual degradation with time under continuous applied voltages, resulting in a reduction in their capability to withstand applied voltages. Since the service life of electric wires or cables per se is as long as thirty years, the initial thickness of such dielectric layers thus must be increased over their initial requirements to compensate for the above reduction in their ability to withstand applied voltages with the passage of time.

On the other hand, recent urban developments have required increased power transmission capacity for electric wires or cables while keeping the volume thereof as small as possible. This has led to the problem, with electric wires or cables having a dielectric layer consisting essentially of a polyolefin, of increasing transmission voltage without increasing the thickness of the dielectric layer.

It is generally believed that the degradation referred to above results from the formation of "water trees" in a cross-linked polyolefin insulation.

Various approaches to overcome the above problem have been considered, including preventing the occurrence of the above degradation, whereby the decrease in capability to withstand applied voltages during a thirty year service life need not be taken into account, and the requirements of urban areas regarding high transmission capability and low volume can be met.

For example, improved cables or cable joints are described in Japanese Patent Publication No. 89322/74, Japanese Utility Model Publication No. 29008/74, and Japanese Patent Publication No. 51180/81. In these cables or joints a polyethylene composition with an ethylene-vinyl acetate copolymer compounded therewith is used as an insulating material, whereby resistance against degradation has been improved to a certain extent.

Recently, however, it has been discovered that when cross-linked polyethylene cables, particularly those cables covered with an insulating material, are used at high temperatures (e.g., 90°C) for long periods of time, they are seriously degraded.

### Summary of the invention

The inventors, taking note of the above points, performed extensive research on the aging of electric wires or cables of the foregoing type, and found that aging is primarily caused by trees (or electrochemical trees, as they are sometimes termed) generated in the polyolefin dielectric from voids which develop in the polyolefin dielectric material, that many trees from voids generate especially at high temperature such as 90°C, and that the degradation described above can be avoided by preventing the generation of trees from the voids in dielectric polyolefin material, and one can significantly decrease the thickness of the dielectric layer.

A primary object of the present invention is thus to provide electric wires or cables in which the development of trees especially at high temperature is prevented and longer service life is obtained.

Another object of the present invention is to provide a cross-linked polyethylene insulated cable which is prepared by extruding a polyethylene composition onto a conductor, the polyethylene composition comprising polyethylene, more than 10% to less than 30% by weight of an ethylene-vinyl acetate copolymer (hereinafter referred to as "EVA") having a vinyl acetate (hereinafter referred to as "VA") content of more than 25% to less than 35% by weight and an organic peroxide, and thereafter cross-linking the thus extruded polyethylene composition. The percentage showing the amount of the EVA is based on the total amount of the polyethylene and the EVA.

By the use of the electric wires or cables of the present invention, the disadvantages of the prior art are overcome in that the development of trees is prevented, to thereby provide a service life several to several tens times as long as that of a conventional polyolefin dielectric insulated wire or cable. As a result, we succeeded in significantly decreasing the initial thickness required of the polyolefin dielectric layer in such wires or cables.

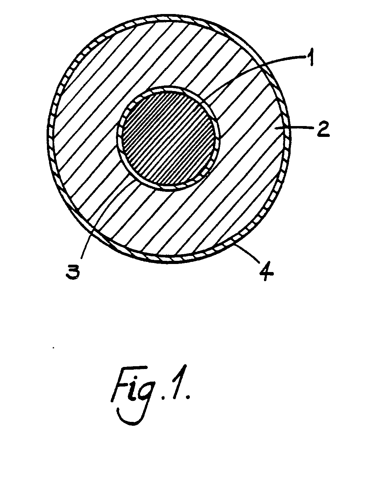

### Brief description of the drawing

The Figure is a cross-sectional view of a cross-linked polyethylene cable.

### Detailed description of the invention

Preferred range of melt index of the polyethylene used in the present invention is about 0.5 to about 10, and that of the EVA is about 0.3 to about 100.

The VA content of the ethylene-vinyl acetate copolymer as used herein is preferably from 28 to 33% by weight, more preferably 30% by weight.

Organic peroxides which can be employed in the present invention include conventional organic peroxide cross-linking agents for a polyethylene. Preferable examples of the organic peroxides are dicumyl peroxide, di-tert-butyl peroxide and 2,5 - dimethyl - 2,5 - di(tert - butyl peroxy) hexane. The amount of the organic peroxide is not limited, but is preferably about 1% to about 7% by weight based on the total amount of the polyethylene and the EVA.

The polyethylene composition used in the present invention may further contain antioxidant such as 4,4' - thiobis(3 - methyl - 6 - tert - butylphenol).

In the cross-linked polyethylene insulated cables of the present invention, the degree of cross-linking is not limited but is preferably about 60% to about 95%.

The present invention will hereinafter be explained in detail by reference to the following examples and comparative examples.

Cross-linked polyethylene insulated cables (150 mm², 60 kV class) were produced using the compositions shown in Table 1. The Figure shows a cross-sectional view of each cross-linked polyethylene cable comprising a conductor 1, an insulating layer 2, an inner semiconductive layer 3 and an outer semiconductive layer 4. The insulating layer 2 is formed from a polyethylene/EVA composition of Table 1 and the semiconductive layers 3 and 4 are each made of NUC 0580 (trade name, produced by Nippon Unicar Co., Ltd.). NUC 0580 comprises EVA containing carbon, dicumyl peroxide and antioxidant. The thickness of the insulating layer 2 is 11 mm, that of the inner semiconductive layer 3 is 0.8 mm and that of the outer semiconductive layer is 0.8 mm.

A current was circulated which makes the temperature of the conductor to 90°C and the voltage of 160 kV was applied.

The time to breakdown the cable of application of voltage was measured to evaluate degradation of the cable at high temperature. These times are hereinafter referred to as the "breakdown time", and are shown in Table 1 with the breakdown time (334 hours) of Comparative Example 1 as a base (1).

The following can be seen from Table 1.

With cables produced using compositions in which 20% EVA having a VA content of 15% or 25%, respectively, were compounded with polyethylene (Comparative Examples 1 and 2), the resistance to degradation at high temperatures was slightly improved as compared with the cable of Comparative Example 1, but it was not satisfactorily improved to the extent that a long service life (e.g., 30 years) could be guaranteed.

On the other hand, when EVA having a VA content of more than 25% was used (Example 1), degradation at high temperature was greatly improved. In particular, when the VA content was 30% (Example 2), the cable showed a very high resistance against degradation. Also, at a VA content of 33%, excellent characteristics were obtained.

However, when the VA content was further increased, e.g., EVA having a VA content of 35% was used (Comparative Examples 4 and 5), the characteristics of the resulting cables were slightly improved as compared with the cable of Comparative Example 1, but they were not satisfactory.

TABLE 1

| | Comp. Ex. 1 | Comp. Ex. 2 | Comp. Ex. 3 | Ex. 1 | Ex. 2 | Ex. 3 | Comp. Ex. 4 | Comp. Ex. 5 | Comp. Ex. 6 | Comp. Ex. 7 | Ex. 4 | Ex. 5 | Comp. Ex. 8 | Comp. Ex. 9 | Comp. Ex. 10 |
|---|---|---|---|---|---|---|---|---|---|---|---|---|---|---|---|
| Polyethylene*[1] | 100 | 80 | 80 | 80 | 80 | 80 | 80 | 60 | 90 | 60 | 85 | 75 | 70 | 70 | 50 |
| EVA*[2], VA=15% by wt. | | 20 | | | | | | | | | | | 10 | 30 | 50 |
| EVA*[3], VA=25% by wt. | | | 20 | | | | | | | | | | | | |
| EVA*[4], VA=28% by wt. | | | | 20 | | | | | | | | | | | |
| EVA*[5], VA=30% by wt. | | | | | 20 | | | | | | 15 | 25 | | | |
| EVA*[6], VA=33% by wt. | | | | | | 20 | | | 40 | 10 | | | | | |
| EVA*[7], VA=35% by wt. | | | | | | | | 20 | | | | | | | |
| DCP*[8] | 2 | 2 | 2 | 2 | 2 | 2 | 2 | 2 | 2 | 2 | 2 | 2 | 2 | 2 | 2 |
| SWC*[9] | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 |
| Breakdown time (with that of Comparative Example 1 as 1) | 1 | 1.1 | 1.2 | 3.3 | 4.0 | 3.1 | 1.3 | 1.3 | 1.1 | 1.2 | 3.5 | 3.3 | 1.4 | 1.5 | 1.4 |

Note
*[1]Density=0.92, M.I.=1.3 (produced by Sumitomo Chemical Co., Ltd.)
*[2]Density=0.94, M.I.=0.6 (produced by Sumitomo Chemical Co., Ltd.)
*[3]Density=0.95, M.I.=3 (produced by Sumitomo Chemical Co., Ltd.)
*[4]Density=0.95, M.I.=15 (produced by Mitsui Polychemical Co., Ltd.)
*[5]Density=0.95, M.I.=20 (produced by Sumitomo Chemical Co., Ltd.)
*[6]Density=0.96, M.I.=30 (produced by Mitsui Polychemical Co., Ltd.)
*[7]Density=0.96, M.I.=60 (produced by Sumitomo Chemical Co., Ltd.)
*[8]Dicumyl peroxide (produced by Mitsui Petrochemical Co., Ltd.)
*[9]4,4'-Thiobis(3-methyl-6-tert-butylphenol) as antioxidant (produced by Kawaguchi Chemical Co., Ltd.)

The above densities were all measured at a temperature of 20°C. M.I. was measured at a temperature of 190°C under a weight of 2,160 g.

The amount of EVA having a VA content falling within the above-described range which is compounded with the polyethylene is critical in the present invention.

With a cable produced using a composition in which the same EVA as was used in Example 3 is used, but the amount of the EVA compounded is 40% or higher as in Comparative Example 5, the resistance to degradation is slightly superior to that of Comparative Example 1, but the same is not improved satisfactorily. The same is the case with Comparative Example 7. Conversely, when the same EVA as was used in Example 3 is used, but the amount of the EVA compounded is 10% or less, as can be seen from Comparative Example 6, the resistance against degradation is not satisfactory.

On the other hand, cables produced using compositions in which EVA having a VA content falling within the above-described range, i.e., EVA having a VA content of 15% (Example 4) and EVA having a VA content of 25% (Example 5), is compounded with polyethylene, show excellent resistance against degradation.

As can be seen from the results shown in Table 1, only when the compositions of the invention comprising polyethylene and EVA are used as insulating materials, are there obtained cables having excellent characteristics.

## Claims

1. A cross-linked polyethylene insulated cable which is prepared by extrusion coating a polyethylene composition on a conductor, the polyethylene composition comprising polyethylene, more than 10% to less than 30% by weight of an ethylene-vinyl acetate copolymer having a vinyl acetate (VA) content of more than 25% to less than 35% by weight, an organic peroxide and others, and thereafter cross-linking the thus coated polyethylene composition.

2. The cross-linked polyethylene insulated cable as claimed in Claim 1, wherein the VA content of the ethylene-vinyl acetate copolymer is from 28 to 33% by weight.

3. The cross-linked polyethylene cable as claimed in Claim 2, wherein the VA content of the ethylene-vinyl acetate copolymer is 30% by weight.

4. The cross-linked polyethylene cable as claimed in Claim 3, wherein the amount of the ethylene-vinyl acetate copolymer compounded is about 20% by weight based on the composition.

## Patentansprüche

1. Ein mit vernetztem Polyethylen isoliertes Kabel, welches hergestellt wurde durch Extrusionsbeschichtung einer Polyethylen - Zusammensetzung auf einem Leiter, wobei die Polyethylen - Zusammensetzung Polyethylen, mehr als 10 Gew.% bis weniger als 30 Gew.% Ethylen - Vinylacetat - Copolymer mit einem Vinylacetat (VA)-Gehalt von mehr als 25 Gew.% bis weniger als 35 Gew.%, ein organisches Peroxid und weitere Bestandteile umfasst, und anschliessendes Vernetzen der so aufgetragenen Polyethylen - Zusammensetzung.

2. Mit vernetztem Polyethylen isoliertes Kabel gemäss Anspruch 1, worin der VA-Gehalt des Ethylen - Vinylacetat - Copolymers 28 bis 33 Gew.% beträgt.

3. Mit vernetztem Polyethylen isoliertes Kabel gemäss Anspruch 2, worin der VA-Gehalt des Ethylen - Vinylacetat - Copolymers 30 Gew.% beträgt.

4. Mit vernetztem Polyethylen isoliertes Kabel gemäss Anspruch 3, worin die Menge des kompoundierten Ethylen - Vinylacetat - Copolymers etwa 20 Gew.%, bezogen auf die Zusammensetzung, beträgt.

## Revendications

1. Câble isolé par du polyéthylène réticulé qui est préparé par revêtement par extrusion d'une composition de polyéthylène sur un conducteur, la composition de polyéthylène comprenant du polyéthylène, plus de 10% à moins de 30% en poids d'un copolymère éthylène-acétate de vinyle ayant une teneur en acétate de vinyle (VA) de plus de 25% à moins de 35% en poids, un peroxyde organique et autres, et ensuire réticulation de la composition de polyéthylène ainsi appliquée.

2. Câble isolé par du polyéthylène réticulé selon la revendication 1, dans lequel la teneur en VA du copolymère éthylène-acétate de vinyle est de 28 à 33% en poids.

3. Câble de polyéthylène réticulé selon la revendication 2, dans lequel la teneur en VA du copolymère éthylène-acétate de vinyle est de 30% en poids.

4. Câble de polyéthylène réticulé selon la revendication 3, dans lequel la quantité du copolymère éthylène-acétate de vinyle combiné est d'environ 20% en poids, par rapport à la composition.

Fig.1.